# EUROPÄISCHE PATENTSCHRIFT

(11) **EP 3 056 847 B1**
(45) Veröffentlichungstag und Bekanntmachung des Hinweises auf die Patenterteilung: **19.09.2018**
(21) Anmeldenummer: 16154998.5
(22) Anmeldetag: 10.02.2016
(51) Int. Cl.: F28D 7/02, F28F 3/12, H02K 5/20, H02K 9/19

(54) **Vorrichtung und Verfahren zur Temperierung eines Körpers**
METHOD AND DEVICE FOR TEMPERING A BODY
DISPOSITIF ET PROCEDE DESTINES A LA THERMOREGULATION D'UN CORPS

(30) Priorität: 11.02.2015 DE 102015101955
(43) Veröffentlichungstag der Anmeldung: 17.08.2016
(73) Patentinhaber: Witzenmann GmbH, 75175 Pforzheim (DE)
(72) Erfinder: Rösler, René, 76137 Karlsruhe (DE); Jux, Benedict, 51467 Bergisch Gladbach (DE); Schwarz, Philipp, 75233 Tiefenbronn (DE)
(74) Vertreter: Lemcke, Brommer & Partner Patentanwälte Partnerschaft mbB

(56) Entgegenhaltungen:
- DE-A1- 4 303 699
- DE-A1-102009 051 881
- DE-A1-102012 220 175
- US-A- 3 009 072
- US-A- 3 204 666

## Beschreibung

Die Erfindung betrifft eine Vorrichtung zur Temperierung, d.h. zum Kühlen oder Erwärmen eines Körpers mit einer Einrichtung zum Umströmen des Körpers mit einem Temperiermedium.

Weiterhin betrifft die Erfindung einen temperierbaren Körper, umfassend einen zu temperierenden Körper, vorzugsweise einen zylinderförmigen Körper, mit einer Vorrichtung zur Temperierung des Körpers.

Des Weiteren betrifft die Erfindung ein Verfahren zur Temperierung eines Körpers.

Außerdem betrifft die Erfindung eine Verwendung eines Wickelschlauchs zur Temperierung eines Körpers.

Es ist bekannt, elektrische Maschinen, insbesondere Elektromotoren, mithilfe eines Temperiermediums in Form eines Fluids zu kühlen. Dabei wird die zu kühlende Maschine von dem Fluid umströmt, wobei das Fluid die Abwärme der Maschine von dieser wegtransportiert. Bekannt ist beispielsweise der Einsatz von Wasser, Luft oder Öl als Fluid bzw. Temperiermedium.

Die DE 43 03 699 A1 offenbart einen Agraffschlauch, der schraubengangförmig aus einem vorprofilierten Metallband Verfalzen benachbarter Bandkanten gewickelt ist.

Die US 3,009,072 A zeigt eine Vorrichtung zum Kühlen eines Motors, bei der um den Motor herum eine Doppelschicht angeordnet ist, in welche ein Fluid einpressbar ist.

Bei einer vorbekannten Bauform umfasst die Temperiervorrichtung einen schraubenförmigen Strömungsraum, durch den das Fluid zum Zweck der Kühlung eines Elektromotors um diesen herum geleitet wird, welcher Strömungsraum unter Einsatz von CNC-Dreh- und Fräsmaschinen aus einem Metallkörper geformt und um den Elektromotor herum angeordnet ist.

Als nachteilig erweist sich hierbei, dass der Einsatz von CNC-Dreh- und Fräsmaschinen zur Fertigung des schraubenförmigen Strömungsraums der Temperiervorrichtung zeit- und kostenaufwändig ist. Prinzipbedingt kommt es bei der Fertigung zu einem Verschnitt, da ein erheblicher Teil des Metallkörpers zur Formung des schraubenförmigen Strömungsraums abgetragen werden muss. Weiterhin weist die Temperiervorrichtung durch den notwendigen Einsatz von massiven Metallteilen ein hohes Gewicht auf, was sich insbesondere beim Einsatz des Elektromotors in Kraftfahrzeugen als besonders nachteilig erweist.

Der Erfindung liegt daher die Aufgabe zugrunde, eine verbesserte Vorrichtung zum Temperieren eines Körpers anzugeben, die eine effiziente Temperierung des Körpers bei geringerem Material- und Fertigungsaufwand für die dafür eingesetzte Vorrichtung ermöglicht.

Die Aufgabe wird gelöst durch eine Vorrichtung mit den Merkmalen des Anspruchs 1, durch einen temperierbaren Körper mit den Merkmalen des Anspruchs 13, durch ein Verfahren mit den Merkmalen des Anspruchs 15 sowie durch eine Verwendung mit den Merkmalen des Anspruchs 18. Vorteilhafte Weiterbildungen ergeben sich aus den jeweiligen abhängigen Ansprüchen.

Erfindungsgemäß wird bei einer Vorrichtung der eingangs beschriebenen Art die Aufgabe dadurch gelöst, dass die Einrichtung wenigstens einen aus einem metallischen Band gewickelten Wickelschlauch umfasst, welcher Wickelschlauch an einer Mantelfläche des Körpers angeordnet ist und diese zumindest bereichsweise umgibt, welcher Wickelschlauch im Inneren seines Profils einen lichten, schraubenförmigen Strömungsraum für das Temperiermedium ausbildet.

Zwischen der Mantelfläche oder Außenfläche des Körpers und dem Wickelschlauch ist eine Zwischenschicht angeordnet, welche dicht gegenüber Flüssigkeiten und Gasen ist. Diese Zwischenschicht dient der Abdichtung des Strömungsraums gegen den Körper. Ein weiterer Vorteil dieser Zwischenschicht ist, dass sie Form- und Lagetoleranzen des Körpers ausgleichen und einen optimalen Austausch von Wärmeenergie zwischen dem Körper und dem Temperiermedium ermöglichen kann. Vorzugsweise kommt deshalb eine Zwischenschicht mit guter thermischer Leitfähigkeit zum Einsatz. Vorteilhaft gestaltet sich auch die Tatsache, dass der Wickelschlauch in einfacher Art und Weise auf die Zwischenschicht gewickelt werden kann, sodass die Montage der Vorrichtung zur Temperierung des Körpers erleichtert und beschleunigt wird.

Das Profil des Wickelschlauchs kann dabei zu dem Körper hin offen oder geschlossen ausgebildet sein. Der Wickelschlauch kann neben der bekannten und regelmäßig verwendeten Ausführung in einem Stahlwerkstoff auch aus Aluminium, Kupfer oder vergleichbaren Werkstoffen hergestellt sein, die eine bessere Wärmeleitung als der Stahlwerkstoff haben. Eine verbesserte Wärmeleitung kann sich, insbesondere bei der geschlossenen Ausführung, vorteilhaft auf ein Temperiervermögen der Vorrichtung auswirken.

Die mit der Erfindung erzielten Vorteile liegen darin, dass der Wickelschlauch im Vergleich zu den aus dem Stand der Technik bekannten Temperiervorrichtungen ein geringeres Gewicht aufweist und in einfacher Art und Weise um den zu temperierenden Körper gewickelt werden kann. Zudem handelt es sich bei einem Wickelschlauch vorzugsweise um Standardware, die kostengünstig in unterschiedlichen Ausgestaltungen verfügbar ist und erfindungsgemäß einer neuartigen Verwendung zugeführt wird.

Durch die Verwendung des Wickelschlauchs können außerdem temperaturbedingte Ausdehnungen des zu temperierenden Körpers zumindest teilweise kompensiert werden.

Vorzugsweise liegt die Innenkammerhöhe des Wickelschlauchs in einem Stauchzustand, d.h. in einem Zustand, in dem das profilierte Band des Wickelschlauchs in axialer Richtung maximal zusammengeschoben ist, in einem Bereich von 2 mm bis 15 mm, besonders bevorzugt in einem Bereich von 3 mm bis 8 mm. Eine solche, im Vergleich zu Wickelschläuchen, die aus dem Stand der Technik bekannt sind, größere Innenkammerhöhe bringt den Vorteil mit sich, dass der Strömungsraum, der von dem Temperiermedium durchströmt wird, vergrößert ist, wodurch eine größere Menge des Temperiermediums durch den Strömungsraum strömen kann.

Bevorzugt weist der Wickelschlauch im Stauchzustand eine Innenkammerbreite in einem Bereich von 7 mm bis 15 mm auf. Analog zur Innenkammerhöhe des Wickelschlauchs im Stauchzustand bringt dies den Vorteil mit sich, dass der Strömungsraum, der von dem Temperiermedium durchströmt wird, relativ groß ist, wodurch eine größere Menge des Temperiermediums durch den Strömungsraum strömen kann.

In einer vorteilhaften Ausführungsform weist der Wickelschlauch ein Hakenprofil auf. Das Hakenprofil hat gegenüber einem Agraffprofil, welches eine weitere gebräuchliche Profilform eines Wickelschlauchs darstellt, den Vorteil, dass wiederum der Strömungsraum, durch den das Temperiermedium strömt, vergrößert ist.

Vorzugsweise ist das Hakenprofil des Wickelschlauchs asymmetrisch ausgebildet. Der Vorteil liegt hierbei darin, dass der Strömungsraum, durch den das Temperiermedium strömt, bei gleichzeitiger Verringerung des Materialaufwands für den Wickelschlauchs größer sein kann als bei der Verwendung eines symmetrischen Profils des Wickelschlauchs.

In einer alternativen Ausführungsform der Erfindung ist das Hakenprofil des Wickelschlauchs symmetrisch ausgebildet. Der hiermit erzielte Vorteil liegt darin, dass der Wickelschlauch eine größere Stabilität aufweist als bei der Verwendung eines asymmetrischen Profils.

Bei einer vorteilhaften Weiterbildung ist das symmetrische Profil zwei- oder mehrgängig. Bei einer derartigen Ausführung eignet sich die Vorrichtung zur Temperierung des Körpers im Gegenstromprinzip, wodurch die Effizienz der Temperierung erhöht ist.

Die Anzahl der Gänge kann bei Einsatz für verschiedene zu temperierende Körper gezielt durch entsprechende Geometrien des Wickelschlauchs variiert werden. Des Weiteren kann vorgesehen sein, eine Art des verwendeten Temperiermediums von Gang zu Gang zu variieren.

Der Wickelschlauch kann an seiner dem Körper abgewandten Seite von einem starren oder flexiblen Mantelmaterial umhüllt sein, welches Mantelmaterial vorzugsweise dicht gegenüber Flüssigkeiten und Gasen ist. Das Mantelmaterial kann hierbei - ohne Beschränkung - Edelstahl, Aluminium, Kunststoff oder ein Elastomer sein. Vorteilhaft ist hierbei, dass das Mantelmaterial den Wickelschlauch gegen die Umwelt abdichtet und das Temperiermedium nicht unkontrolliert aus dem inhärent undichten Wickelschlauch entweichen kann. Es können noch weitere Lagen um das Mantelmaterial angeordnet sein, z.B. ein Geflecht- oder Ringwellschlauch.

Besonders bevorzugt kann eine Querschnittsfläche des lichten, schraubenförmigen Strömungsraums über einen vorzugsweise axialen Verlauf des Wickelschlauchs betragsmäßig ungleichmäßig sein. In anderen Worten bedeutet dies, dass die Querschnittsfläche des von dem Wickelschlauch gebildeten Strömungsraums in Betrag und/oder Form nicht konstant sein muss, sondern variabel sein kann. Die Variation des Strömungsraums bzw. der Querschnittsfläche kann dabei durch Stauchung des Wickelschlauchs erfolgen. Mit der Variation des Strömungsraums ist der Vorteil verbunden, solche Temperiermedien effizienter einsetzen zu können, die beim Kühlvorgang einen Phasenübergang, beispielsweise von flüssig zu gasförmig, durchlaufen.

Bei einer vorteilhaften Ausführungsform der Vorrichtung weist das Profil des Wickelschlauchs bzw. weisen dessen Stege oder Wandungen eine Wellung oder Wellenform auf, die zu einer Beeinflussung des Strömungsverhaltens des in dem lichten, schraubenförmigen Strömungsraum geführten Temperiermediums ausgebildet und vorgesehen ist. Beispielweise kann eine solche Ausgestaltung zu einer turbulenten Strömung des Temperiermediums führen. Dadurch kann eine Wärmeübertragung von dem zu temperierenden Körper auf das Temperiermedium gezielt beeinflusst werden.

Bei einer alternativen Ausführungsform der Erfindung weist der Wickelschlauch an wenigstens einer Seite, vorzugsweise Stirnseite, des zu temperierenden Körpers eine zusätzliche Wicklung auf, deren Wicklungsradius, insbesondere bezogen auf eine (Längs-) Achse des zu temperierenden Körpers, nach Art einer Spirale oder Schneckenlinie abnimmt. Mithilfe der zusätzlichen Wicklung und des dadurch erreichbaren zusätzlichen Strömungsraums für das Temperiermedium können zusätzliche Elemente, die an dem zu temperierenden Körper stirnseitig angeordnet sind, temperiert werden. Bei diesen Elementen kann es sich beispielsweise um ein leistungselektronisches Bauteil handeln, ohne dass die Erfindung hierauf beschränkt wäre.

Eine andere Weiterentwicklung der erfindungsgemäßen Vorrichtung ist gekennzeichnet durch eine erste Anschlussöffnung zum Einleiten des Temperiermediums in den Strömungsraum und durch wenigstens eine zweite Anschlussöffnung zum Ausleiten des Temperiermediums aus dem Strömungsraum. Die genannten Öffnungen können, je nach konkreter Anforderung, auf einer oder auf verschiedenen Seiten des Körpers angeordnet sein. Dabei kann eine Orientierung der Öffnungen je nach konkreter Anforderung derart gewählt sein, dass eine betreffende Öffnung in Richtung einer (ausgezeichneten) Achse, beispielsweise einer Längsachse, des Körpers öffnet. Alternativ kann eine Orientierung der Öffnungen je nach konkreter Anforderung derart gewählt sein, dass eine betreffende Öffnung quer oder unter einem anderen, beliebigen Winkel zu der Richtung einer (ausgezeichneten) Achse des Körpers öffnet.

Ein anderer Aspekt der Erfindung betrifft einen temperierbaren Körper, welcher vorzugsweise zylinderförmig ausgebildet ist und welcher eine Mantelfläche oder Außenfläche aufweist, an der eine erfindungsgemäße Vorrichtung angeordnet ist, die den Körper zumindest bereichsweise umgibt. Auf diese Weise ist ein Körper geschaffen, der sich in einfacher, kostengünstiger und flexibler Weise je nach Anforderung temperieren lässt.

Der Wickelschlauch, und ggf. die Zwischenschicht und/oder das Mantelmaterial, können stoff-, kraft- und/oder formschlüssig mit dem zu temperierenden Körper verbunden sein. Insbesondere kann die VErbindung durch eine helixförmige (Laser-)Schweißnaht realisiert sein. Die Fixierung des Wickelschlauchs und ggf. der Zwischenschicht an dem zu temperierenden Körper mittels einer helixförmigen (Laser-)Schweißnaht kann die Verwendung eines Mantelmaterials bzw. dessen Abdichtung überflüssig machen. Die Fixierung kann vollumfänglich und über einen kompletten axialen Verlauf des Wickelschlauchs ausgebildet sein. Sie kann aber auch nur bereichsweise oder punktuell ausgebildet sind. Es ist auch möglich, dass der Wickelschlauch keine Fixierung an dem Körper aufweist. Der Körper kann - ohne Beschränkung - ein Motor, insbesondere ein Elektromotor, oder Teil einer Rohr- oder Schlauchleitung sein, insbesondere eine Abgasleitung oder dgl. bei einem Kfz mit Verbrennungsmotor. Auf diese Weise eignet sich die erfindungsgemäße Vorrichtung für eine große Anzahl möglicher Anwendungsfälle. Auch flexible Körper oder flexible Schlauchleitungen lassen sich auf diese Weise temperieren.

Alternativ kann der Körper ein Rotorgehäuse, insbesondere das Rotorgehäuse eines Turboladers oder Kompressors, sein. Speziell auch nichtrunde Körper können so temperiert werden.

Ein wieder anderer Aspekt der Erfindung betrifft ein Verfahren zur Temperierung eines Körpers, bei dem der Körper zumindest bereichsweise mit einem Wickelschlauch aus einem metallischen, profilierten Band umwickelt wird, welcher Wickelschlauch im Inneren seines Profils einen lichten, schraubenförmigen Strömungsraum für ein Temperiermedium ausbildet, welcher Strömungsraum von dem Temperiermedium durchströmt wird. Eine Vielzahl von Körpern, insbesondere auch Körper mit variablen Quer- und Längsprofilen und auch flexible Körper, kann auf diese Weise einfach und flexibel temperiert werden, worauf bereits hingewiesen wurde.

Als Temperiermedium kann ein gasförmiges Medium, insbesondere Luft, oder eine Flüssigkeit, insbesondere Öl oder Wasser, verwendet werden, je nach konkreter Temperierungsanforderung.

Weiterhin kann vorgesehen sein, dass das Temperiermedium, das den Wickelschlauch durchströmt, passiv in den Strömungsraum einströmt und passiv aus dem Strömungsraum herausströmt, beispielsweise unter Ausnutzung einer Bewegung des Körpers, was eine besonders kostengünstige Realisierung ermöglicht.

Alternativ kann vorgesehen sein, dass das Temperiermedium, das den Wickelschlauch durchströmt, aktiv in den Strömungsraum des Wickelschlauchs geleitet wird und aktiv wieder aus dem Strömungsraum herausgeleitet wird. Vorteilhaft gestaltet sich hierbei, dass die Temperierung durch den größeren Druck, unter dem das Temperiermedium im Vergleich zu einer passiven Strömungsführung steht, effizienter und steuerbar durchgeführt werden kann. Außerdem ist die Temperierung auf diese Weise grundsätzlich unabhängig von einer Bewegung des Körpers.
Ein weiterer Aspekt der Erfindung betrifft eine neuartige Verwendung eines an sich bekannten Wickelschlauchs, der standardmäßig zum Schutz innenliegender Leitungen oder als (Innen-)Liner zur Strömungsführung verwendet wird. Im Zuge einer erfindungsgemäßen Verwendung eines Wickelschlauchs zur Temperierung eines Körpers ist vorgesehen, dass der Körper an seiner Mantelfläche wenigstens teilweise mit dem Wickelschlauch aus einem metallischen, profilierten Band umhüllt wird, und dass der Wickelschlauch im Inneren seines Profils einen lichten, schraubenförmigen Strömungsraum für ein Temperiermedium ausbildet. Dies erweitert den Einsatzbereich der bekannten Wickelschläuche.

Weitere bevorzugte Merkmale und Ausführungsformen der Erfindung ergeben sich aus der folgenden Beschreibung von Ausführungsbeispielen anhand der Zeichnung.
Fig. 1 zeigt einen Körper, der von einem Wickelschlauch umwickelt ist, im Längsschnitt;
Fig. 2 zeigt einen Wickelschlauch, der ein asymmetrisches Profil aufweist, im Längsschnitt;
Fig. 3 zeigt einen Wickelschlauch, der ein symmetrisches Profil aufweist, im Längsschnitt;
Fig. 4 zeigt eine erfindungsgemäße Vorrichtung mit schräg zur Wickelrichtung des Wickelschlauchs angeordneten Anschlussöffnungen;
Fig. 5 zeigt eine erfindungsgemäße Vorrichtung mit orthogonal zur Wickelrichtung des Wickelschlauchs angeordneten Anschlussöffnungen; und
Fig. 6 zeigt eine doppelwandige Rohrleitung mit einem erfindungsgemäß verwendeten Wickelschlauch als Zwischenstruktur im Querschnitt.
Nachstehend werden Ausführungsformen der Erfindung beschrieben, die Bezug auf die beigefügten Figuren nehmen.

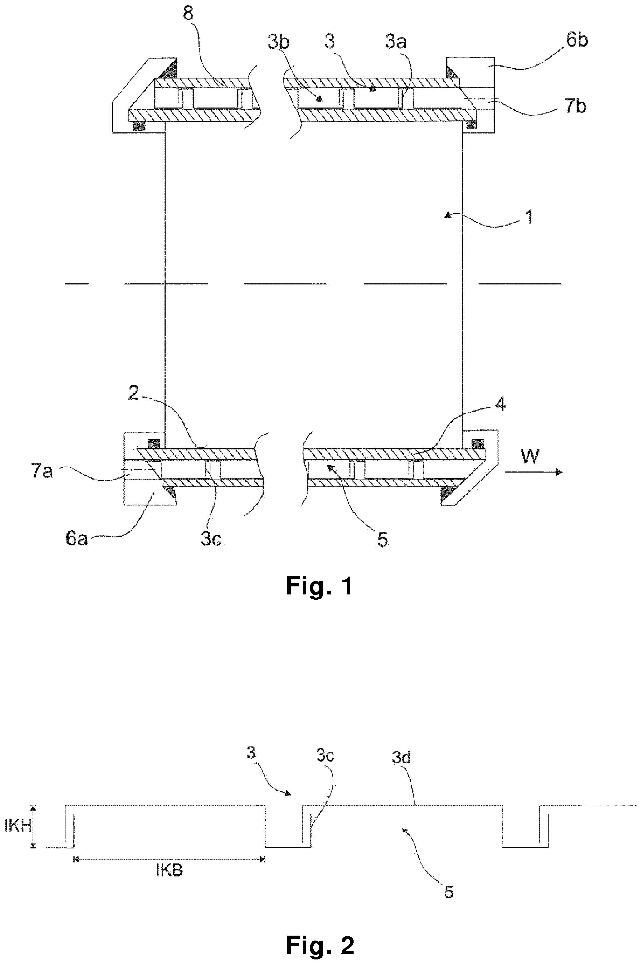

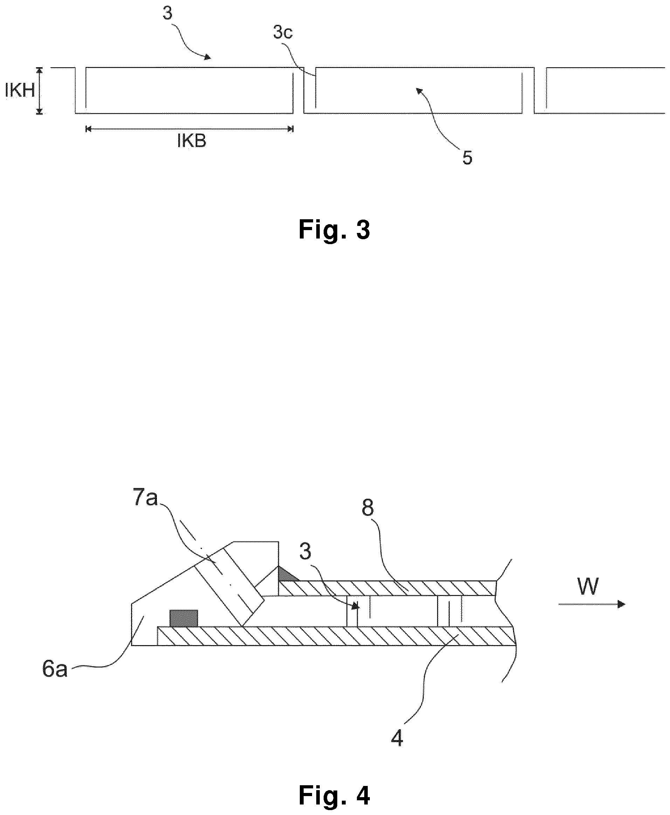

Die in Figur 1 dargestellte Ausführungsform der Erfindung zeigt den Längsschnitt durch einen nur schematisch dargestellten Körper (1) in Form eines Elektromotors. Der Elektromotor ist an seiner Mantelfläche 2 von einem Wickelschlauch 3 umgeben, der aus einem aus einem metallischen Band 3a gewickelt ist. Zwischen dem Wickelschlauch 3 und dem Elektromotor ist eine Zwischenschicht 4 angeordnet, welche dicht gegenüber Flüssigkeiten oder Gasen ist. Der Wickelschlauch 3 bildet im Inneren seines Profils 3b einen lichten, schraubenförmigen Strömungsraum 5 für ein Temperiermedium (nicht gezeigt) aus. Eine Profilhöhe PH (vgl. Figur 2, 3) des Wickelschlauchs 3 ist maßgeblich für die Größe des zur Verfügung stehenden Strömungsraums 5 und beträgt im vorliegenden Ausführungsbeispiel 4 mm. Gegenüber aus dem Stand der Technik bekannten Ausführungen von Wickelschläuchen ist die Innenkammerhöhe IKH des Wickelschlauchs 3 im Stauchzustand erhöht, um den zur Verfügung stehenden Strömungsraum 5 zu vergrößern.
Das zu dem Wickelschlauch 3 gewickelte Band 3a bildet Wandungen und Stege aus, worauf bereits hingewiesen wurde. Diese können eine (natürliche) Wellung aufweisen oder gezielt wellenförmig ausgebildet sein.
Eine Innenkammerbreite IKB (vgl. Figur 2, 3) des Wickelschlauchs 3 im Stauchzustand ist analog zur Innenkammerhöhe IKH des Wickelschlauchs 3 im Stauchzustand ebenfalls vergrößert, um das Volumen des Strömungsraums 5 zu vergrößern, und beträgt im vorliegenden Fall 10 mm.
An den beiden Enden des Wickelschlauchs 3 bzw. des Körpers 1 sind Endstücke 6a, 6b angeordnet. Diese Endstücke 6a, 6b weisen Anschlussöffnungen 7a, 7b auf, durch welche ein Temperiermedium in den Strömungsraum 5 ein- sowie aus diesem ausgeleitet werden kann. Das Temperiermedium durchströmt den Strömungsraum 5 innerhalb der einzelnen Wickelungen 3c des Wickelschlauchs 3, welche Wickelungen 3c spiralförmig angeordnet sind, und trägt damit zum Abtransport der abgestrahlten Wärmeenergie des Elektromotors bei. Die spiralförmige Anordnung der Wickelungen 3c macht den Wärmetransport besonders effizient.

An der dem Elektromotor abgewandten Seite des Wickelschlauches 3 ist der Wickelschlauch 3 von einem Mantelmaterial 8 umhüllt, welches dicht gegenüber Flüssigkeiten und Gasen ist. Damit wird erreicht, dass das Temperiermedium den Wickelschlauch 3, welcher prinzipbedingt Undichtheiten aufweist, nur an den beiden Anschlussöffnungen 7a, 7b verlassen kann.

Wie in Figur 2 gezeigt, weist der Wickelschlauch 3 ein sogenanntes Hakenprofil auf. Hierbei sind die einzelnen Wickelungen 3c des Wickelschlauchs 3 ineinander verhakt, um die notwendige Stabilität des Wickelschlauchs 3 zu gewährleisten. In der in Figur 2 dargestellten Ausführungsform ist das Profil asymmetrisch. Die breite Seite 3d des asymmetrischen Profils bildet den Strömungsraum 5, durch den das Temperiermedium strömt.

Eine alternative Ausführungsform des Profils des Wickelschlauchs 3 ist in Figur 3 dargestellt. Hierbei handelt es sich um ein symmetrisches Profil. Der Strömungsraum 5 wird hier durch den Zwischenraum der ineinander verhakten Teile des Wickelschlauchs 3 gebildet.

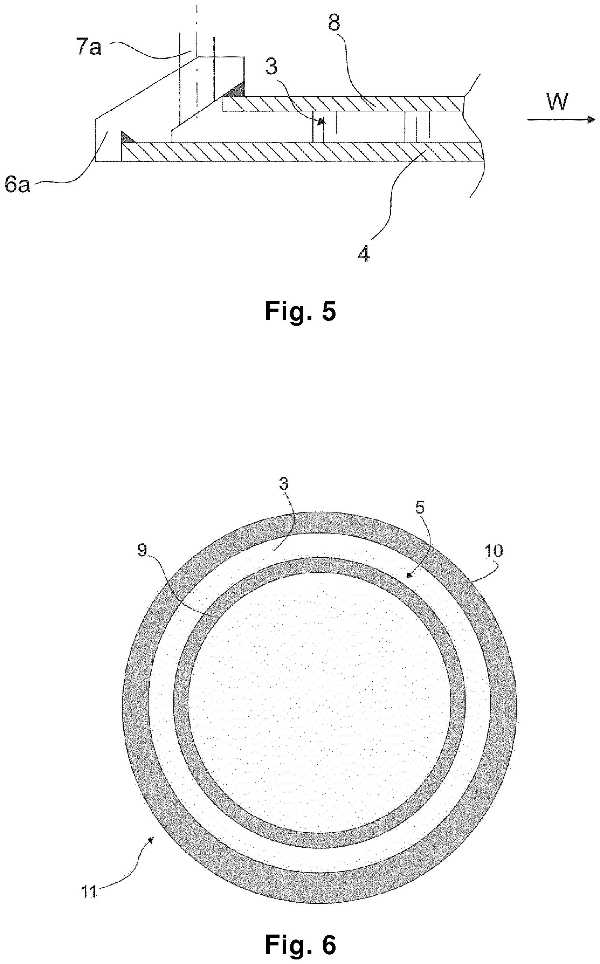

Die beiden Anschlussöffnungen 7a, 7b können, wie in Fig. 1 gezeigt, parallel zu der Wickelrichtung W des Wickelschlauch 3 orientiert sein. Alternativ können die beiden Anschlussöffnungen 7a, 7b aber auch in einer Richtung orientiert sein, die schräg (Figur 4), beispielsweise unter einem Winkel von etwa 45°, oder in etwa orthogonal (Figur 5) zur Wickelrichtung W des Wickelschlauchs 3 angeordnet ist. Hierdurch lassen sich die Anschlussöffnungen 7a, 7b in einfacher Art und Weise an die bauraumtechnischen Erfordernisse, beispielsweise im Motorraum eines Kraftfahrzeuges, anpassen.

Eine alternative Realisierung der Erfindung ist in Figur 6 gezeigt. Es handelt sich hierbei um eine doppelwandige Rohrleitung 11 mit einem Wickelschlauch 3 zwischen einem Innenrohr 9 und einem Außenrohr 10. Sowohl das Innenrohr 9 als auch das Außenrohr 10 können dicht gegen Flüssigkeiten und Gase sein. Das Innenrohr 9 fungiert hierbei analog zur Zwischenschicht 4, das Außenrohr 10 analog zum Mantelmaterial 8 der zuvor beschriebenen Ausführungsformen der Erfindung. Der Wickelschlauch 3 bildet, wie in den bisherigen Ausführungsformen, im Inneren seines Profils einen Strömungsraum 5, durch den ein Temperiermedium strömt. Im Gegensatz zu den zuvor beschriebenen Ausführungsformen der Erfindung wird nicht die von einem Elektromotor stammende Wärmeenergie (Abwärme) durch das Temperiermedium abgeführt, sondern Wärmeenergie eines im Inneren des Innenrohrs 9 strömenden Mediums.

## Patentansprüche

1. Vorrichtung zur Temperierung eines Körpers (1) mit einer Einrichtung zum Umströmen des Körpers (1) mit einem Temperiermedium,
**dadurch gekennzeichnet, dass**
die Einrichtung wenigstens einen aus einem metallischen Band (3a) gewickelten Wickelschlauch (3) umfasst, welcher Wickelschlauch (3) an einer Mantelfläche (2) des Körpers (1) angeordnet ist und diese zumindest bereichsweise umgibt, welcher Wickelschlauch (3) im Inneren seines Profils (3b) einen lichten, schraubenförmigen Strömungsraum (5) für das Temperiermedium ausbildet, wobei zwischen der Mantelfläche (2) des Körpers (1) und dem Wickelschlauch (3) zumindest eine Zwischenschicht (4) angeordnet ist, welche Zwischenschicht (4) dicht gegenüber Flüssigkeiten und Gasen ist und um welche Zwischenschicht (4) der Wickelschlauch (3) gewickelt ist.

2. Vorrichtung nach Anspruch 1, **dadurch gekennzeichnet, dass** eine Innenkammerhöhe (IKH) des Wickelschlauchs (3) im Stauchzustand in einem Bereich von 2 mm bis 15 mm, vorzugsweise in einem Bereich von 3 mm bis 8 mm, liegt.

3. Vorrichtung nach einem der vorangegangenen Ansprüche, **dadurch gekennzeichnet, dass** eine Innenkammerbreite (IKB) des Wickelschlauchs (3) im Stauchzustand in einem Bereich von 7 mm bis 15 mm liegt.

4. Vorrichtung nach einem der vorangegangenen Ansprüche, **dadurch gekennzeichnet, dass** der Wickelschlauch (3) ein Hakenprofil aufweist.

5. Vorrichtung nach einem der vorangegangenen Ansprüche, **dadurch gekennzeichnet, dass** das Profil (3b) asymmetrisch ausgebildet ist.

6. Vorrichtung nach einem der vorangegangenen Ansprüche, **dadurch gekennzeichnet, dass** das Profil (3b) symmetrisch ausgebildet ist.

7. Vorrichtung nach Anspruch 6, **dadurch gekennzeichnet, dass** das Profil (3b) zwei- oder mehrgängig ist.

8. Vorrichtung nach einem der vorangegangenen Ansprüche, **gekennzeichnet durch** eine erste Anschlussöffnung (7a) zum Einleiten des Temperiermediums in den Strömungsraum (5) und durch wenigstens eine zweite Anschlussöffnung (7b) zum Ausleiten des Temperiermediums aus dem Strömungsraum (5).

9. Vorrichtung nach einem der vorangegangenen Ansprüche, **dadurch gekennzeichnet, dass** der Wickelschlauch (3) an seiner dem Körper (1) abgewandten Seite von einem Mantelmaterial (8) umhüllt ist, welches Mantelmaterial (8) dicht gegenüber Flüssigkeiten und Gasen ist.

10. Vorrichtung nach einem der vorangegangenen Ansprüche, **dadurch gekennzeichnet, dass** eine Querschnittsfläche des lichten, schraubenförmigen Strömungsraums (5) über einen Verlauf des Wickelschlauchs (3) in Betrag und/oder Form verschieden ist.

11. Vorrichtung nach einem der vorangegangenen Ansprüche, **dadurch gekennzeichnet, dass** das Profil (3b) des Wickelschlauchs (3) oder dessen Stege oder Wandungen eine Wellung aufweist, die zu einer Beeinflussung des Strömungsverhaltens des in dem lichten, schraubenförmigen Strömungsraum (5) geführten Temperiermediums ausgebildet und vorgesehen ist.

12. Vorrichtung nach einem der vorangegangenen Ansprüche, **dadurch gekennzeichnet, dass** der Wickelschlauch (3) an wenigstens einer Seite, vorzugsweise Stirnseite, des Körpers (1) eine zusätzliche Wicklung aufweist, deren Wicklungsradius sich spiralförmig oder nach Art einer Schneckenlinie verringert.

13. Temperierbarer Körper, umfassend einen zu temperierenden Körper, vorzugsweise zylinderförmig, mit einer Mantelfläche (2) sowie eine Vorrichtung nach einem der Ansprüche 1 bis 12 zur Temperierung des Körpers, deren Wickelschlauch (3) an der Mantelfläche (2) des Körpers angeordnet ist und diese zumindest bereichsweise umgibt.

14. Temperierbarer Körper nach Anspruch 13, **dadurch gekennzeichnet, dass** der Körper ein Motor, insbesondere Elektromotor (1), ein Rotorgehäuse, insbesondere eines Turboladers oder Kompressors, eine Komponente einer Abgasanlage oder Teil einer Rohr- oder Schlauchleitung ist.

15. Verfahren zur Temperierung eines Körpers,
**dadurch gekennzeichnet, dass**
der Körper zumindest bereichsweise mit einem Wickelschlauch (3) aus einem metallischen, profilierten Band (3a) umwickelt wird, welcher Wickelschlauch (3) im Inneren seines Profils (3b) einen lichten, schraubenförmigen Strömungsraum (5) für ein Temperiermedium ausbildet, welcher Strömungsraum (5) von dem Temperiermedium durchströmt wird.

16. Verfahren nach Anspruch 15, **dadurch gekennzeichnet, dass** als Temperiermedium ein gasförmiges Medium, insbesondere Luft, oder eine Flüssigkeit, insbesondere Wasser, verwendet wird.

17. Verfahren nach Anspruch 15 oder 16, **dadurch gekennzeichnet, dass** das Temperiermedium, das den Wickelschlauch (3) durchströmt, passiv in den Strömungsraum (5) einströmt und passiv aus dem Strömungsraum (5) herausströmt oder dass das Temperiermedium, das den Wickelschlauch (3) durchströmt, aktiv in den Strömungsraum (5) eingeleitet wird.

18. Verwendung eines Wickelschlauchs (3) zur Temperierung eines Körpers,
**dadurch gekennzeichnet, dass**
der Körper an seiner Mantelfläche (2) wenigstens teilweise mit dem Wickelschlauch (3) aus einem metallischen, profilierten Band (3a) umhüllt wird, und dass der Wickelschlauch (3) im Inneren seines Profils (3b) einen lichten, schraubenförmigen Strömungsraum (5) für ein Temperiermedium ausbildet.

## Claims

1. Apparatus for tempering a body (1) with a device for causing a tempering medium to flow around the body (1), **characterised in that** the device includes at least one wound hose (3) wound on a metallic, profile strip (3a), which wound hose (3) is to be arranged on an outer surface (2) of the body (1) to surround it, at least in regions, which wound hose (3) defines in the interior of its profile (3b) a clear, helical flow space for the tempering medium, wherein arranged between the outer surface (2) of the body (1) and the wound hose (3) there is at least one intermediate layer (4), which intermediate layer (4) is impermeable to liquids and gases and around which intermediate layer (4) the wound hose (3) is wound.

2. Apparatus as claimed in Claim 1, **characterised in that** an inner chamber height (IKH) of the wound hose (3) in the compressed state is in a range of 2 mm to 15 mm, preferably in a range of 3 mm to 8 mm.

3. Apparatus as claimed in one of the preceding claims, **characterised in that** an inner chamber breadth (IKB) of the wound hose (3) in the compressed state is in a range of 7 mm to 15 mm.

4. Apparatus as claimed in one of the preceding claims, **characterised in that** the wound hose (3) has a hook profile.

5. Apparatus as claimed in one of the preceding claims, **characterised in that** the profile (3b) is asymmetrically shaped.

6. Apparatus as claimed in one of the preceding claims, **characterised in that** the profile (3b) is symmetrically shaped.

7. Apparatus as claimed in Claim 6, **characterised in that** the profile (3b) has two flights or multiple flights.

8. Apparatus as claimed in one of the preceding claims, **characterised by** a first connecting opening (7a) for conducting the tempering medium into the flow space (5) and by at least one second connecting opening (7b) for conducting the tempering medium out of the flow space (5).

9. Apparatus as claimed in one of the preceding claims, **characterised in that** the wound hose (3) is sheathed on its side remote from the body (1) by a shell material (8), which shell material (8) is impermeable to liquids and gases.

10. Apparatus as claimed in one of the preceding claims, **characterised in that** a cross-sectional area of the clear, helical flow space (5) is different over a course of the wound hose (3) in amount and/or shape.

11. Apparatus as claimed in one of the preceding claims, **characterised in that** the profile (3b) of the wound hose (3) or its webs or walls has a corrugation, which is formed and provided for influencing the flow pattern of the tempering medium conducted into the clear, helical flow space (5).

12. Apparatus as claimed in one of the preceding claims, **characterised in that** the wound hose (3) has an additional winding on at least one side, preferably an end side, of the body (1), the winding radius of which decreases spirally or in the manner of a helical line.

13. A temperable body including a body (1), preferably cylindrical, to be tempered with an outer surface (2) and an apparatus as claimed in one of Claims 1 to 12 for tempering the body, the wound hose (3) of which is arranged on the outer surface (2) of the body and surrounds it, at least in regions.

14. A temperable body as claimed in Claim 13, **characterised in that** the body (1) is a motor, particularly an electric motor, a rotor housing, particularly a turbocharger or compressor, a component of an exhaust gas system or part of a pipeline or hose line.

15. A method of tempering a body (1), **characterised in that** wound around the body (1), at least in regions, is a wound hose (3) consisting of a metallic, profiled strip (3), which wound hose (3) defines in the interior of its profile (3b) a clear, helical flow space (5) for a tempering medium, and tempering medium flows through the flow space (5), and that between the outer surface (2) of the body (1) and the wound hose (3) is arranged at least one intermediate layer (4), which intermediate layer (4) is impermeable to liquids and gases and around which intermediate layer (4) the wound hose (3) is wound.

16. A method as claimed in Claim 15, **characterised in that** a gaseous medium, particularly air, or a liquid, particularly water, is used as the tempering medium.

17. A method as claimed in Claim 15 or 16, **characterised in that** the tempering medium, which flows through the wound hose (3), flows passively into the flow space (5) and flows passively out of the flow space (5) or that the tempering medium, which flows through the wound hose (3), is introduced actively into the flow space (5).

18. Use of a wound hose (3) for tempering a body (1), **characterised in that** the body (1) is sheathed at least partially at its outer surface (2) with the wound hose (3) consisting of a metallic, profiled strip (3a) and that the wound hose (3) defines in the interior of its profile (3b) a clear, helical flow space (5) for a tempering medium and that arranged between the outer surface (2) of the body (1) and the wound hose (3) there is at least one intermediate layer (4), which intermediate layer (4) is impermeable to liquids and gases and around which intermediate layer (4) the wound hose (3) is wound.

## Revendications

1. Dispositif destiné à la thermorégulation d'un corps (1), avec un système pour faire circuler autour du corps (1) un fluide de thermorégulation, **caractérisé en ce que** le système comprend au moins un flexible à ondes hélicoïdales (3) enroulé à partir d'un ruban métallique profilé (3a), ledit flexible à ondes hélicoïdales (3) devant être disposé sur une surface d'enveloppe (2) du corps (1) afin d'entourer celle-ci au moins sectoriellement, et ledit flexible à ondes hélicoïdales (3) formant à l'intérieur de son profil (3b) une chambre d'écoulement libre hélicoïdale (5) pour le fluide de thermorégulation, sachant qu'au moins une couche intermédiaire (4) est disposée entre la surface d'enveloppe (2) du corps (1) et le flexible à ondes hélicoïdales (3), ladite couche intermédiaire (4) étant étanche vis-à-vis des liquides et des gaz et le flexible à ondes hélicoïdales (3) étant enroulé autour de ladite couche intermédiaire (4).

2. Dispositif selon la revendication 1, **caractérisé en ce qu'**une hauteur de chambre intérieure (IKH) du flexible à ondes hélicoïdales (3) dans l'état comprimé se situe dans une plage de 2 mm à 15 mm, de préférence dans une plage de 3 mm à 8 mm.

3. Dispositif selon l'une des revendications précédentes, **caractérisé en ce qu'**une largeur de chambre intérieure (IKB) du flexible à ondes hélicoïdales (3) dans l'état comprimé se situe dans une plage de 7 mm à 15 mm.

4. Dispositif selon l'une des revendications précédentes, **caractérisé en ce que** le flexible à ondes hélicoïdales (3) présente un profil en crochets.

5. Dispositif selon l'une des revendications précédentes, **caractérisé en ce que** le profil (3b) est réalisé asymétrique.

6. Dispositif selon l'une des revendications précédentes, **caractérisé en ce que** le profil (3b) est réalisé symétrique.

7. Dispositif selon la revendication 6, **caractérisé en ce que** le profil (3b) est à deux filets ou davantage.

8. Dispositif selon l'une des revendications précédentes, **caractérisé par** une première ouverture de raccordement (7a) pour introduire le fluide de thermorégulation dans la chambre d'écoulement (5) et par au moins une deuxième ouverture de raccordement (7b) pour évacuer le fluide de thermorégulation de la chambre d'écoulement (5).

9. Dispositif selon l'une des revendications précédentes, **caractérisé en ce que** le flexible à ondes hélicoïdales (3) est enrobé par un matériau d'enveloppe (8) sur son côté opposé au corps (1), ledit matériau d'enveloppe (8) étant étanche vis-à-vis des liquides et des gaz.

10. Dispositif selon l'une des revendications précédentes, **caractérisé en ce que** la section de la chambre d'écoulement libre hélicoïdale (5) est d'un montant et/ou d'une forme variables sur l'étendue du flexible à ondes hélicoïdales (3).

11. Dispositif selon l'une des revendications précédentes, **caractérisé en ce que** le profil (3b) du flexible à ondes hélicoïdales (3) ou de ses parties de liaison ou parois présente une ondulation qui est conçue et prévue pour exercer une influence sur le comportement d'écoulement du fluide de thermorégulation dirigé dans la chambre d'écoulement libre hélicoïdale (5).

12. Dispositif selon l'une des revendications précédentes, **caractérisé en ce que** le flexible à ondes hélicoïdales (3) présente sur au moins un côté du corps (1), de préférence un côté frontal, un enroulement supplémentaire dont le rayon d'enroulement diminue en spirale ou à la manière d'une hélice.

13. Corps pouvant être thermorégulé, comprenant un corps (1) à thermoréguler, de préférence cylindrique, ayant une surface d'enveloppe (2), ainsi qu'un dispositif selon l'une des revendications 1 à 12 destiné à la thermorégulation du corps, dispositif dont le flexible à ondes hélicoïdales (3) est disposé sur la surface d'enveloppe (2) du corps et entoure celle-ci au moins sectoriellement.

14. Corps pouvant être thermorégulé selon la revendication 13, **caractérisé en ce que** le corps (1) est un moteur, en particulier un moteur électrique, un carter de rotor, en particulier d'un turbocompresseur de suralimentation ou d'un compresseur, un composant d'un système d'échappement ou un élément d'une conduite tubulaire ou flexible.

15. Procédé destiné à la thermorégulation d'un corps (1),
**caractérisé en ce qu'**on enroule au moins sectoriellement autour du corps (1) un flexible à ondes hélicoïdales (3) constitué d'un ruban métallique profilé (3a), ledit flexible à ondes hélicoïdales (3) formant à l'intérieur de son profil (3b) une chambre d'écoulement libre hélicoïdale (5) pour un fluide de thermorégulation, ladite chambre d'écoulement (5) étant traversée par le flux de fluide de thermorégulation,
et **en ce qu'**au moins une couche intermédiaire (4) est disposée entre la surface d'enveloppe (2) du corps (1) et le flexible à ondes hélicoïdales (3), ladite couche intermédiaire (4) étant étanche vis-à-vis des liquides et des gaz et le flexible à ondes hélicoïdales (3) étant enroulé autour de ladite couche intermédiaire (4).

16. Procédé selon la revendication 15, **caractérisé en ce qu'**on utilise comme fluide de thermorégulation un fluide gazeux, en particulier de l'air, ou un liquide, en particulier de l'eau.

17. Procédé selon la revendication 15 ou 16, **caractérisé en ce que** le fluide de thermorégulation qui circule à travers le flexible à ondes hélicoïdales (3) pénètre passivement dans la chambre d'écoulement (5) et sort passivement de la chambre d'écoulement (5), ou **en ce que** le fluide de thermorégulation qui circule à travers le flexible à ondes hélicoïdales (3) est introduit activement dans la chambre d'écoulement (5).

18. Utilisation d'un flexible à ondes hélicoïdales (3) pour la thermorégulation d'un corps (1), **caractérisée en ce que** le corps (1) est enrobé au moins partiellement sur sa surface d'enveloppe (2) par le flexible à ondes hélicoïdales (3) constitué d'un ruban métallique profilé (3a), et **en ce que** le flexible à ondes hélicoïdales (3) forme à l'intérieur de son profil (3b) une chambre d'écoulement libre hélicoïdale (5) pour un fluide de thermorégulation, et **en ce qu'**au moins une couche intermédiaire (4) est disposée entre la surface d'enveloppe (2) du corps (1) et le flexible à ondes hélicoïdales (3), ladite couche intermédiaire (4) étant étanche vis-à-vis des liquides et des gaz et le flexible à ondes hélicoïdales (3) étant enroulé autour de ladite couche intermédiaire (4).
